# EUROPÄISCHE PATENTANMELDUNG

(11) **EP 4 822 311 A1**
(43) Veröffentlichungstag der Anmeldung: **14.10.2026**
(21) Anmeldenummer: 26170725.1
(22) Anmeldetag: 02.04.2026
(51) Int. Cl.: G01J 3/02, G01J 3/14, G01J 3/18, G01J 3/28

(54) **OPTISCHES SPEKTROMETER UND VERFAHREN ZUR HERSTELLUNG EINES OPTISCHEN SPEKTROMETERS**

(30) Priorität: 09.04.2025 DE 102025113979
(71) Anmelder: Bruker Optics GmbH & Co. KG, 76275 Ettlingen (DE)
(72) Erfinder: Lüttjohann, Dr. Stephan, 76149 Karlsruhe (DE)
(74) Vertreter: Kohler Schmid Möbus Patentanwälte

(57) **Zusammenfassung**

Ein Optisches Spektrometer (1) umfassend eine Eingangsapertur (2) in einer Aperturebene (6), ein kollimierendes optisches System (A) mit mindestens zwei optischen Elementen (A1, A2), das in einer Dispersionsrichtung x eine erste Brennweite fAx und eine erste Brennebene (BAx) und in einer Nicht-Dispersionsrichtung y eine zweite Brennweite fAy und eine zweite Brennebene (BAy) aufweist, ein dispersives Element (3), ein fokussierendes optisches System (B), einen Detektor (4) zur Detektion des fokussierten Lichts in einer Detektorebene (7), wobei sich die erste Brennweite fAx und die zweite Brennweite fAy des kollimierenden optischen Systems (A) voneinander unterscheiden, wobei die erste Brennebene (Bax) und die zweite Brennebene (BAy) des kollimierenden optischen Systems (A) mit der Aperturebene 6 zusammenfallen, wobei die optischen Elemente (A1, A2) in einer Dispersionsrichtung x jeweils eine erste Element-Brennweite fA1x, fA2x und in Nicht-Dispersionsrichtung y eine zweite Element-Brennweite fA1y, fA2y aufweisen, ist dadurch gekennzeichnet, dass sowohl die erste Element-Brennweite als auch die zweite Element-Brennweite zumindest eines der optischen Elemente (A1, A2) des kollimierenden optisches Systems (A) endlich ist und sich voneinander unterscheiden.

## Beschreibung

### Hintergrund der Erfindung

Die Erfindung betrifft ein optisches Spektrometer mit einer optischen Achse, umfassend eine Eingangsapertur zur Beschränkung von entlang der optischen Achse in das Spektrometer eintretenden Lichts, wobei die Eingangsapertur in einer Aperturebene angeordnet ist, die senkrecht zur optischen Achse ist, ein kollimierendes optisches System mit mindestens zwei optischen Elementen zur Kollimation des durch die Eingangsapertur hindurchtretenden Lichts, wobei das kollimierende optische System senkrecht zur optischen Achse in einer Dispersionsrichtung x eine erste Brennweite fAx und eine erste Brennebene und in einer dazu senkrechten Nicht-Dispersionsrichtung y eine zweite Brennweite fAy und eine zweite Brennebene aufweist, ein dispersives Element zur spektralen Aufspaltung in der Dispersionsrichtung x von auf das dispersive Element auftreffenden Lichts, ein fokussierendes optisches System zur Fokussierung des von dem dispersiven Element spektral aufgespaltenen Lichts, und einen Detektor zur Detektion des fokussierten Lichts in einer Detektorebene, wobei das fokussierende optische System senkrecht zur optischen Achse in der Dispersionsrichtung x eine erste Brennweite fBx und eine erste Brennebene und in der Nicht-Dispersionsrichtung y eine zweite Brennweite fBy und eine zweite Brennebene aufweist.

Die erste Brennweite fAx des kollimierenden optischen Systems und die zweite Brennweite fAy des kollimierenden optischen Systems unterscheiden sich also voneinander, und die erste Brennebene des kollimierenden optischen Systems und die zweite Brennebene des kollimierenden optischen Systems fallen mit der Aperturebene zusammen.

Bei dispersiven Spektrometern trifft Licht aus einer Eingangsapertur auf das kollimierende optische System, welches das so kollimierte Licht weiter auf das dispersive Element lenkt. Vom dispersiven Element aus wird Licht unterschiedlicher Wellenlängen unterschiedlich stark in Dispersionsrichtung abgelenkt, wodurch es zu einer spektralen Aufspaltung in Dispersionsrichtung des auf das dispersive Element auftreffenden Lichts kommt. Das fokussierende optische System nimmt dieses Licht auf und fokussiert die unterschiedlichen Wellenlängen, die aus unterschiedlichen Richtungen kommen, auf unterschiedliche Stellen des Detektors.

Die Brennweiten des kollimierenden optischen Systems und des fokussierenden optischen Systems werden aufgrund von spektralen Eigenschaften gewählt. Die so gewählten Brennweiten, welche für die Dispersionsrichtung optimiert wurden, haben aber bei konventionellen Spektrometern auch eine direkte Auswirkung auf die Eigenschaften des Spektrometers in Nicht-Dispersionsrichtung wie z.B. die Größe des Bildes der Eingangsapertur in Nicht-Dispersionsrichtung oder die Größe der benötigten optischen Komponenten in Nicht-Dispersionsrichtung. Das führt dazu, dass bei konventionellen Spektrometern Nachteile entstehen und oftmals sperrige Komponenten benötigt werden.

Aus [US659] und [US413] sind dispersive Spektrometer bekannt, die kollimierende und fokussierende optische Systeme mit Freiformspiegeln aufweisen. Durch die Verwendung von Freiformspiegeln soll die Abbildungsqualität optimiert werden.

[US807] offenbart ein abbildendes Spektrometer, bei dem ein anamorpher Spiegel verwendet wird, um bei schrägem Einfallswinkel auftretende Abbildungsfehler zu korrigieren und sicherzustellen, dass der Spiegel in Dispersionsrichtung und in Nicht-Dispersionsrichtung dieselbe Brennweite aufweist.

[US088] offenbart ein Gitterspektrometer mit einem Spiegel zur Kollimation vor einem Gitter und einem Spiegel zur Fokussierung hinter dem Gitter und einem Sensor, auf dem eine Zylinderlinse direkt aufgebracht ist. Diese soll zum einen Abbildungsfehler korrigieren, zum anderen aber auch das erzeugte Bild in der Nicht-Dispersionsrichtung auf dem Sensor komprimieren. Damit wird die Eingangsapertur in Dispersionsrichtung und Nicht-Dispersionsrichtung mit unterschiedlicher Vergrößerung auf den Detektor abgebildet. Nachteilig an dieser Vorrichtung ist, dass die Abbildungsqualität durch Astigmatismus geprägt ist. Lichtpunkte aus der Eingangsapertur werden demnach auf vertikale Linien am Sensor abgebildet.

[US772] beschreibt ein anamorphes Spektrometer für ein Fernerkundungssystem. Das kollimierte Licht wird über einen anamorphen Spiegel nur in einer Dimension auf einen Spalt fokussiert. In der anderen Dimension bleibt das Licht kollimiert. Hinter dem Spalt wird das Licht durch einen weiteren anamorphen Spiegel wieder vollständig kollimiert und auf ein Gitter geleitet. Die vom Gitter in unterschiedliche Richtungen gebeugten Strahlen unterschiedlicher Wellenlänge werden dann auf ein Detektorarray fokussiert. Das in [US772] beschriebene Spektrometer eignet sich nicht zur Abbildung von Licht mit einer homogenen numerischen Apertur aus einer Eintrittsapertur (wie dies bspw. bei Licht aus einem Lichtleiter mit Durchmesser D und numerischer Apertur NA oder bei Licht aus einem Mikroskop, das über eine Tubuslinse auf den Eintrittsspalt des Spektrometers fokussiert wird, der Fall ist).

[US140] offenbart ein Spektrometer, bei dem nicht ein kollimierter Strahl auf ein planes Gitter gelenkt wird, sondern ein fokussierter Strahl auf ein gekrümmtes Gitter. Das beschriebene System versucht, die Abbildungseigenschaften des Spektrometers (Eingangsapertur auf Detektor) durch Ausnutzen von Symmetrieeigenschaften zu optimieren. Das gekrümmte Gitter sorgt hierbei nicht nur für die spektrale Aufspaltung des Lichts, sondern trägt auch zu den Abbildungseigenschaften bei. Die dargestellte Optimierung lässt sich gut machen für ein stationäres System. Wird hingegen gewünscht, dass auch andere Spektralbereiche auf den Detektor abgebildet werden, müsste das Gitter gedreht werden, was die Symmetrie zerstört und die Abbildungseigenschaften stark reduziert. Auch das Wechseln zu einem anderen Gitter mit anderer Furchendichte lässt sich nicht ohne Weiteres realisieren. Bei keinem der zuvor beschriebene Spektrometer ist es möglich, die Bauhöhe der optischen Komponenten zu reduzieren.

[WO584] beschreibt ein Spektrometer zur Messung von Abständen und/oder Dicken eines Messobjekts. Das Spektrometer weist in der Kollimationsoptik eine erste Zylinderlinse auf, die Licht, welches von der Eingangsapertur kommt, orthogonal zu einer Detektorzeilenrichtung kollimiert, sowie eine zweite Zylinderlinse, die hinter der ersten Zylinderlinse angeordnet ist und die das Licht, welches von der Eingangsapertur kommt, in Detektorzeilenrichtung kollimiert. Nachteilig an dieser Anordnung ist, dass die erste Zylinderlinse in einem fest vorgegebenen Abstand zur Eintrittsöffnung positioniert sein muss, wodurch der optische Aufbau des Spektrometers nicht flexibel gestaltbar ist.

### Aufgabe der Erfindung

Es ist Aufgabe der Erfindung, ein Spektrometer sowie ein Verfahren zur Herstellung eines Spektrometers vorzuschlagen, das ein hohes spektrales Auflösungsvermögen aufweist und gleichzeitig kompakt gebaut werden kann.

### Beschreibung der Erfindung

Diese Aufgabe wird erfindungsgemäß gelöst durch ein optisches Spektrometer gemäß Patentanspruch 1 und ein Verfahren zu Herstellung eines optischen Spektrometers gemäß Patentanspruch 12.

Bei dem erfindungsgemäßen Spektrometer unterscheiden sich die erste Brennweite fAx des kollimierenden optischen Systems und die zweite Brennweite fAy des kollimierenden optischen Systems voneinander. Darüber hinaus fallen erfindungsgemäß die erste Brennebene des kollimierenden optischen Systems und die zweite Brennebene des kollimierenden optischen Systems mit der Aperturebene zusammen.

Das kollimierende optische System weist also einerseits in Dispersionsrichtung x und in Nicht-Dispersionsrichtung y unterschiedliche Brennweiten auf, die Brennpunkte in Dispersionsrichtung x und in Nicht-Dispersionsrichtung y fallen jedoch zusammen. Um dies zu erreichen, werden für das kollimierende optische System vorzugsweise optische Elemente verwendet, die unterschiedliche Brechkraft in Dispersionsrichtung x und in Nicht-Dispersionsrichtung y aufweisen. Das Zusammenfallen der Brennebenen mit der Aperturebene wird erreicht durch entsprechende Wahl und Positionierung der optischen Elemente (und damit der Hauptebenen) des kollimierenden optischen Systems.

Erfindungsgemäß ist sowohl die erste Element-Brennweite als auch die zweite Element-Brennweite zumindest eines der optischen Elemente des kollimierenden optischen Systems endlich, wobei sich die erste Element-Brennweite von der zweiten Element-Brennweite dieses optischen Elements voneinander unterscheidet. D.h. wenn die oben genannte Bedingung für das n-te optische Element gelten soll, gilt also: fAnx≠∞, fAny≠∞,fAnx≠fAny, (n≥1).

Das erfindungsgemäße Spektrometer ermöglicht zusätzliche Freiheitsgrade bei der Wahl der verschiedenen Brennweiten, wodurch die Bauhöhe und das Auflösungsvermögen des Spektrometers optimiert werden können.

Für die Abbildungsqualität in Dispersionsrichtung bzw. senkrecht zur Dispersions-richtung ist es von Vorteil, wenn die Brechkraft des kollimierenden optischen Systems in Dispersionsrichtung bzw. senkrecht zur Dispersionsrichtung nicht nur von einem optischen Element übernommen wird, sondern auf beide optische Elemente verteilt wird. Erfindungsgemäß wird die Brechkraft des kollimierenden optischen Systems daher zumindest in einer Richtung auf beide optischen Elemente aufgeteilt, d.h. beide optischen Elemente tragen zur Kollimation in dieser Richtung bei (also die Element-Brennweiten der einzelnen optischen Elemente fA1x und fA1y des kollimierenden optischen Systems sind jeweils endlich und/oder die Element-Brennweiten der einzelnen optischen Elemente fA2x und fA2y des fokussierenden optischen Systems sind jeweils endlich). Das kollimierende optische System kann dadurch auch kompakter gestaltet werden. Bei langen Brennweiten und kleinen Durchmessern des kollimierten Strahls in Dispersionsrichtung bzw. in Richtung senkrecht zur Dispersionsrichtung, also große f-Zahl (f/#=f/D) in dieser Richtung, reicht es ggf. auch aus, dass in dieser Richtung ein optisches Element die gesamte Brechkraft realisiert. Im letzteren Fall wäre dann also eine Element-Brennweite unendlich.

Die optischen Elemente weisen senkrecht zur optischen Achse in der Dispersions-richtung x jeweils eine erste Element-Brennebene und in der Nicht-Dispersionsrichtung y eine zweite Element-Brennebene auf, wobei die erste Element-Brennebene und die zweite Element-Brennebene außerhalb der Aperturebene liegen. Wird die Brechkraft von mehr als einem optischen Element übernommen, können die gewünschten Brennweiten fAx und fAy des kollimierenden optischen Systems durch Wahl der Positionen der beiden optischen Elemente und durch deren Element-Brennweiten fA1x, fA1y, fA2x, fA2y realisiert werden. Die Hauptebenen liegen damit nicht am Ort der optischen Elemente, sodass der Abstand der optischen Elemente zur Eingangsapertur nicht den Brennweiten fAx und fAy entsprechen müssen. Dies hat den Vorteil, dass die Positionierung der optischen Elemente freier gestaltet werden kann und das optische System insgesamt auch kompakter realisiert werden kann.

Prinzipiell sind sowohl für das kollimierende optische System A als auch für das fokussierende optische System B Kombinationen von positiven und negativen Element-Brennweiten möglich.

Bei dem erfindungsgemäßen Spektrometer kann es sich um ein abbildendes oder nicht-abbildendes Spektrometer handeln. Bei beiden Varianten wird für jede im Licht vorhandenen Wellenlänge ein Bild der Eingangsapertur in der Detektorebene erzeugt. Die Abbildungsqualität hat dabei Einfluss auf die Trennbarkeit der verschiedenen im Licht vorhandenen Wellenlängen auf dem Detektor. Kann zudem unterschieden werden, aus welchem Bereich das Licht aus der Eingangsapertur in Nicht-Dispersionsrichtung y kommt, spricht man von einem abbildenden Spektrometer.

Als dispersives Element dient vorzugsweise ein Reflexions- oder Transmissionsgitter oder ein Prisma. Als Detektor wird vorzugsweise ein Detektorarray verwendet.

Die erste Brennweite fBx des fokussierenden optischen Systems und die zweite Brennweite fBy des fokussierenden optischen Systems können prinzipiell im Rahmen der Erfindung gleich sein (einheitliche Brennweite des fokussierenden optischen Systems).

Bei einer besonders bevorzugten Ausführungsform jedoch umfasst auch das fokussierende optische System mindestens zwei optische Elemente und die erste Brennweite fBx des fokussierenden optischen Systems und die zweite Brennweite fBy des fokussierenden optischen Systems unterscheiden sich voneinander. Die erste Brennebene und die zweite Brennebene des fokussierenden optischen Systems fallen bei dieser Ausführungsform mit der Detektor-Ebene zusammen. Bei dieser Ausführungsform weist also auch das fokussierende optische System einerseits in Dispersionsrichtung x und in Nicht-Dispersionsrichtung y unterschiedliche Brennweiten auf (doppelt anamorphes Spektrometer), die Brennpunkte in Dispersionsrichtung x und in Nicht-Dispersionsrichtung y fallen jedoch zusammen. Um dies zu erreichen, werden für das fokussierende optische System optische Elemente verwendet, die unterschiedliche Brechkraft in Dispersionsrichtung x und in Nicht-Dispersionsrichtung y aufweisen. Das Zusammenfallen der Brennebenen mit der Detektorebene wird erreicht durch entsprechende Wahl und Positionierung der optischen Elemente (und damit der Hauptebenen) des fokussierenden optischen Systems.

Der Vorteil dieser besonders bevorzugten Ausführungsform ist, dass die vier vorkommenden Brennweiten fBx, fAx, fAy und fBy unabhängig voneinander sind. Mit jeder dieser Brennweiten sind gewisse Eigenschaften des Spektrometers verbunden, die im Folgenden dargelegt sind:
**fBx** (ersten Brennweite des fokussierenden optischen Systems):
   - bestimmt zusammen mit der Dispersionsstärke des dispersiven Elements und der Detektorgröße in Dispersionsrichtung den in einer Messung zugänglichen **Spektralbereich;**
**fAx** (ersten Brennweite des kollimierenden optischen Systems):
   - hat Einfluss zusammen mit der Größe der Eingangsapertur in Dispersions-richtung x auf das **Auflösungsvermögen** λ/Δλ;
   - bestimmt maßgeblich die **Baugröße des Spektrometers in Dispersionsrichtung x.**
**fAy** (zweite Brennweite des kollimierenden optischen Systems):
   - bestimmt maßgeblich die **Baugröße des Spektrometers in Nicht-Dispersionsrichtung y;**
   - bestimmt zusammen mit der zweiten Brennweite fBy des fokussierenden optischen Systems das **Abbildungsverhältnis in Nicht-Dispersions-richtung y.**
   - Hat zusammen mit fBy Einfluss auf den **optischen Durchsatz**
**fBy** (zweite Brennweite des kollimierenden optischen Systems):
   - bestimmt zusammen mit der zweiten Brennweite fAy des kollimierenden optischen Systems das **Abbildungsverhältnis in Nicht-Dispersions-richtung y;**
   - hat zusammen mit der zweiten Brennweite fAy des kollimierenden optischen Systems Einfluss auf den **optischen Durchsatz.**

Wie man aus der Übersicht sieht, sind einige Eigenschaften von nur einer Brennweite abhängig (Spektralbereich, Bauhöhe in Nichtdispersionsrichtung), andere von zwei Brennweiten (Abbildungsverhältnis in Nicht-Dispersionsrichtung, Durchsatz).

Bei einem konventionellen Spektrometer hingegen, sind weitere Eigenschaften miteinander verknüpft, da bei diesen Spektrometern fAx=fAy und fBx=fBy ist.

Mit fAx=fAy ergibt sich bei einem konventionellen Spektrometer, dass Bauhöhe in Nicht-Dispersionsrichtung, Bauhöhe in Dispersionsrichtung, Auflösungsvermögen und Durchsatz miteinander verknüpft sind.

Mit fBx=fBy ergibt sich bei einem konventionellen Spektrometer, dass der während einer Messung zugängliche Spektralbereich, das Abbildungsverhältnis in Nicht-Dispersionsrichtung und der optische Durchsatz miteinander verknüpft ist.

Diese Verknüpfungen sind bei einem Spektrometer nach dieser Erfindung in besonders bevorzugter Ausführungsform nicht vorhanden.

Vorzugsweise ist die erste Brennweite fAx des kollimierenden optischen Systems größer als die zweite Brennweite fAy des kollimierenden optischen Systems: fAx > fAy. Dies hat den Effekt, dass die Breite des Lichtstrahls in Nicht-Dispersionsrichtung y nach Durchlaufen des kollimierenden optischen Systems kleiner ist als in Dispersionsrichtung x. Dadurch wird erreicht, dass die optischen Elemente und das dispersive Element in Nicht-Dispersionsrichtung y kleiner ausfallen können als in Dispersionsrichtung x und somit eine kompaktere Bauweise in Nicht-Dispersionsrichtung y möglich ist, ohne Einbußen bezüglich der Étendue (Lichtdurchsatz) des Spektrometers in Kauf nehmen zu müssen. Das Spektrometer kann somit flacher realisiert werden. Zudem erzielt man durch kleinere optische Elemente einen Kostenvorteil.

Vorzugsweise ist fAx > 1,1*fAy. Die erste Brennweite fAx des kollimierenden optischen Systems und die zweite Brennweite fAy des kollimierenden optischen Systems unterscheiden sich also deutlich voneinander, so dass ein deutlicher Effekt in der Größenreduzierung der optischen Elemente erreicht werden kann. Bei einer besonders bevorzugten Ausführungsform ist fAx > 1,4*fAy.

Bei einer speziellen Ausführungsform ist die erste Brennweite fAx des kollimierenden optischen Systems größer als oder gleich groß wie die erste Brennweite fBx des fokussierenden optischen Systems: fAx ≥ fBx. Die Eingangsapertur wird in diesem Fall in Dispersionsrichtung x (spektrale Dimension) entweder 1:1 oder verkleinert abgebildet. Im Falle einer verkleinerten Abbildung wird eine verbesserte optische Auflösung erreicht.

Vorzugsweise ist die zweite Brennweite fAy des kollimierenden optischen Systems gleich der zweiten Brennweite fBy des fokussierenden optischen Systems (fAy = fBy). Die Eingangsapertur wird dann in Nicht-Dispersionsrichtung y (örtliche Dimension) 1:1 abgebildet. Dies ist insbesondere vorteilhaft, wenn das Licht eines vorgeschalteten optischen Systems (z.B. eines Mikroskops) spektral analysiert werden und die Vergrößerung des vorgeschalteten optischen Systems nicht weiter verändert werden soll.

Alternativ dazu kann durch Wahl des Verhältnisses der zweiten Brennweite fAy des kollimierenden optischen Systems zur zweiten Brennweite fBy des fokussierenden optischen Systems ein gewünschtes Abbildungsverhältnis my der Eingangsapertur auf den Detektor in der Nicht-Dispersionsrichtung y erreicht werden $\frac{f By}{f Ay} = my$*.* Insbesondere kann vorgesehen sein, dass die zweite Brennweite fAy des kollimierenden optischen Systems größer als die zweite Brennweite fBy des fokussierenden optischen Systems ist: fAy > fBy. Dies führt zu einer Verkleinerung der Eingangsapertur in Nicht-Dispersionsrichtung y auf den Detektor. Bei einer gegebenen Detektorgröße in Nicht-Dispersionsrichtung y kann also eine größere Eingangsapertur verwendet werden, die vollständig auf den Detektor abgebildet wird. Dies erhöht den optischen Durchsatz des Spektrometers (höhere Étendue), da mehr Licht in das Spektrometer eintreten kann. Es kann auch vorgesehen sein, dass die zweite Brennweite fAy des kollimierenden optischen Systems kleiner als die zweite Brennweite fBy des fokussierenden optischen Systems ist: fAy < fBy. Dadurch wird ein vergrößertes Bild der Eingangsapertur auf dem Detektor in Nicht-Dispersionsrichtung y erreicht.

Bei einer weiteren bevorzugten Ausführungsform des erfindungsgemäßen Spektrometers ist die erste Brennweite fAx des kollimierenden optischen Systems gleich der ersten Brennweite fBx des fokussierenden optischen Systems, die zweite Brennweite fAy des kollimierenden optischen Systems gleich der zweiten Brennweite fBy des fokussierenden optischen Systems, und die erste Brennweite fAx des kollimierenden optischen Systems größer als die zweite Brennweite fAy des kollimierenden optischen Systems: fAx = fBx > fAy = fBy. Die Eingangsapertur wird hier sowohl in Dispersionsrichtung x (spektrale Dimension) als auch in Nicht-Dispersionsrichtung y (örtliche Dimension) 1:1 abgebildet (fAx = fBx und fAy = fBy). Darüber hinaus kann in Nicht-Dispersionsrichtung y eine kompaktere Bauweise realisiert (fAx > fAy) werden.

Bei einer weiteren bevorzugten Ausführungsform des erfindungsgemäßen Spektrometers ist die erste Brennweite fAx des kollimierenden optischen Systems größer als die erste Brennweite fBx des fokussierenden optischen Systems und die zweite Brennweite fAy des kollimierenden optischen Systems gleich der zweiten Brennweite fBy des fokussierenden optischen Systems: fAx > fBx und fAy = fBy. Hier wird die Eingangsapertur in der Dispersionsrichtung x (spektralen Dimension) verkleinert und in der Nicht-Dispersionsrichtung y (örtlichen Dimension) 1:1 abgebildet.

Vorzugsweise besteht das kollimierende optische System und/oder das fokussierende optische System aus Linsen, aus Spiegeln oder aus einer Kombination daraus (katadioptrisch).

Vorzugsweise ist mindestens einer der Spiegel ein Freiformspiegel. Durch die Verwendung von Freiformspiegeln soll gewährleistet werden, dass die Abbildungsqualität von Eingangsapertur auf Detektor für alle vorkommenden Wellenlängen möglichst gut ist.

Darüber hinaus können auch andere vorhandenen Möglichkeiten genutzt werden, um die Abbildungsqualität zu verbessern, wie z.B. Kenntnis über Entstehung und Vermeidung von Aberrationen, Nutzen von Hinzufügen von optischen Elementen, Nutzen von asphärischen Elementen, Optimierung von Systemen durch Raytracing, etc.

Besonders bevorzugt ist, dass das kollimierende optische System einen Zylinderspiegel und einen Freiformspiegel umfasst, vorzugsweise aus einem Zylinderspiegel und einem Freiformspiegel besteht, und dass das fokussierende optische System zwei Freiformspiegeln umfasst, vorzugsweise aus zwei Freiformspiegeln besteht. Ein Zylinderspiegel ist kostengünstiger herzustellen als ein Freiformspiegel. Durch Verwendung eines Zylinderspiegels im kollimierenden optischen System wird die Ausleuchtung des folgenden Freiformspiegels in Nicht-Dispersionsrichtung auf einfache Weise reduziert, und der folgende Freiformspiegel im kollimierenden optischen System sorgt dann für eine gute Kollimation eines ovalen Strahls in Richtung des dispersiven Elements. Auf diese Weise können alle folgenden Komponenten in Nicht-Dispersionsrichtung x eine reduzierte Bauhöhe aufweisen. In dieser bevorzugten Ausführungsform ist zudem die optische Brechkraft des zylindrischen Spiegels A1 geringer, als sie erforderlich wäre, um den Strahl in Nichtdispersions-Richtung vollständig zu kollimieren. Der Strahl zum Freiformspiegel A2 ist weniger, aber immer noch divergierend, und der Freiformspiegel fügt die fehlende optische Brechkraft in der nichtdispersiven Richtung hinzu, um einen Strahl in Richtung des dispersiven optischen Elements zu formen, der in Nichtdispersions-Richtung kollimiert ist. Der Vorteil besteht darin, dass sich die optische Leistung in Nichtdispersions-Richtung auf zwei Elemente mit jeweils geringerer optischer Leistung verteilt, was im Allgemeinen zu besseren Abbildungseigenschaften führt.

Es sei erwähnt, dass die optische Brechkraft des zylindrischen Spiegels/Linse nicht zwingend so gewählt werden muss, dass der Strahl nach dem zylindrischen Spiegel bereits in Nichtdispersions-Richtung kollimiert ist (Brennweite des Zylinderspiegels in der Nichtdispersions-Richtung entspräche dann dem Abstand des Spiegels zur Eintrittsöffnung). Die optische Brechkraft kann - wie oben beschrieben - geringer sein, sie könnte aber auch größer sein, sodass der Strahl hinter dem Zylinderspiegel wieder konvergent ist und auf dem nachfolgenden Freiformspiegel eine Ausleuchtung erzeugt, die in Nichtdispersions-Richtung kleiner ist als die Größe des Zylinderspiegels in dieser Richtung. In diesem Fall müsste die optische Brechkraft des Freiformspiegels in der Nichtdispersions-Richtung negativ sein, um nach dem Freiformspiegel einen kollimierten Strahl in dieser Richtung zu erzielen. Dies würde zu einem Freiformspiegel und einem dispersiven Element mit einer geringeren Höhe als die des zylindrischen Spiegels/Linse führen. Da jedoch die optische Brechkraft des Zylinderspiegels/Linse in diesem Fall sehr groß wäre, könnten Probleme mit der Abbildungsqualität auftreten.

Die Erfindung betrifft auch ein Verfahren zur Herstellung eines zuvor beschriebenen Spektrometers, wobei zur Ausbildung des kollimierenden optischen Systems und des fokussierenden optischen Systems zunächst die erste Brennweite fBx des fokussierenden optischen Systems so gewählt wird, dass mit einem gewählten dispersiven Element ein gewünschter Spektralbereich von λmin bis λmax auf dem Detektor einer vorgegebenen Breite abgebildet wird. Danach kann durch Wahl der ersten Brennweite fAx des kollimierenden optischen Systems das Abbildungsverhältnis mx in Dispersionsrichtung der Eingangsapertur auf den Detektor bestimmt werden, welches Einfluss auf das spektrale Auflösungsvermögen des Spektrometers hat. Das Verhältnis von erster Brennweite fAx des kollimierenden optischen Systems (A) und erster Brennweite fBx des fokussierenden optischen Systems (B) (und damit die erste Brennweite fAx des kollimierenden optischen Systems) wird also in Abhängigkeit von einem gewünschten spektralen Auflösungsvermögen gewählt. Ist fAx > fBx, so wird die Eingangsapertur in Dispersionsrichtung auf den Detektor verkleinert abgebildet, das Auflösungsvermögen verbessert sich (solange eine hinreichende Abbildungsqualität erzielt werden kann). Je größer die erste Brennweite fAx des kollimierenden optischen Systems jedoch gewählt wird, desto größer werden alle optischen Komponenten in Dispersionsrichtung.

Eine Vergrößerung der optischen Komponenten in Nicht-Dispersionsrichtung lässt sich aber durch anschließende Wahl von der zweiten Brennweite fAy des kollimierenden optischen Systems verhindern. Vorzugsweise wird die zweite Brennweite fAy des kollimierenden optischen Systems kleiner als die erste Brennweite fAx des kollimierenden optischen Systems gewählt. Ist fAy < fAx, so können die optischen Elemente und das dispersive Element in Nicht-Dispersionsrichtung kleiner als in Dispersionsrichtung sein. Dies ist nur möglich, da - anders als bei einem konventionellen Spektrometer - die Brennweiten in Dispersionsrichtung x und Nicht-Dispersionsrichtung y unabhängig voneinander gewählt werden können. Zum Schluss kann noch über die Wahl der zweiten Brennweite fBy des fokussierenden optischen Systems das Abbildungsverhältnis in Nicht-Dispersionsrichtung bestimmt werden. Hier kommt es auf die vorhandene Anwendung an, welches Abbildungsverhältnis my=fBy/fAy am besten ist. Soll beispielsweise ein System mit einem hohen Lichtdurchsatz (Étendue) erzeugt werden, so ist eine Verkleinerung in Nicht-Dispersionsrichtung von Vorteil, da dann eine in Nicht-Dispersionsrichtung größere Eingangsapertur auf den Detektor abgebildet werden kann. Wird das Licht eines Mikroskops spektral untersucht und soll die Vergrößerung des Mikroskops durch das folgende Spektrometer nicht verändert werden, so ist eine 1:1 Abbildung in Nicht-Dispersionsrichtung von Vorteil. Sollen Bildstrukturen an der Eingangsapertur örtlich feiner aufgelöst werden, so kann auch eine Vergrößerung der Eingangsapertur in Nichtdispersionsrichtung auf den Detektor von Vorteil sein.

Das Herstellungsverfahren umfasst darüber hinaus die Bereitstellung einer Eingangsapertur in einer Aperturebene, das Bereitstellen eines dispersiven Elements zur spektralen Aufspaltung von auf das dispersive Element auftreffenden Lichts in einer Dispersionsrichtung x und die Bereitstellung eines Detektors in einer Detektorebene.

Das kollimierende optische System, das zur Kollimation von entlang der optischen Achse durch die Eingangsapertur durchtretenden Lichts und zur Lenkung des Lichts auf das dispersive Element dient, wird durch Anordnung mindestens zweier optischer Elemente gebildet, wobei das kollimierende optische System in der Dispersionsrichtung x eine erste Brennweite fAx und eine erste Brennebene und in einer dazu senkrechten Nicht-Dispersionsrichtung y eine zweite Brennweite fAy und eine zweite Brennebene aufweist.

Das fokussierende optische System, das zur Fokussierung von dem dispersiven Element spektral aufgespaltenen Lichts auf den Detektor dient, wird durch Anordnung mindestens zweier weiterer optischer Elemente gebildet, wobei das fokussierende optische System senkrecht zur optischen Achse in der Dispersions-richtung x eine erste Brennweite fBx und eine erste Brennebene und in der Nicht-Dispersionsrichtung y eine zweite Brennweite fBy, und eine zweite Brennebene aufweist.

Die optischen Elemente des kollimierenden optischen Systems werden derart ausgebildet und relativ zueinander und zur Eingangsapertur angeordnet, dass sich die erste Brennweite fAx des kollimierenden optischen Systems und die zweite Brennweite fAy des kollimierenden optischen Systems voneinander unterscheiden, und dass die erste Brennebene des kollimierenden optischen Systems und die zweite Brennebene des kollimierenden optischen Systems mit der Aperturebene zusammenfallen. Die optischen Elemente des fokussierenden optischen Systems werden derart ausgebildet und relativ zueinander und zu dem Detektor angeordnet, dass die erste Brennebene und die zweite Brennebene des fokussierenden optischen Systems mit der Detektor-Ebene zusammenfallen.

Die vorliegende Erfindung basiert darauf, dass man aus mindestens zwei optischen Elementen, wobei jedes dieser optischen Elemente eine Linse oder ein gekrümmter Spiegel sein kann, durch geschickte Wahl der Brechkraft und der Form der optischen Elemente und der Anordnung der optischen Elemente ein optisches System erzeugt, das in zwei zueinander senkrechten Richtungen (Dispersions-richtung und Nicht-Dispersionsrichtung) unterschiedliche Brennweiten besitzt, und bei dem die beiden Hauptebenen so angeordnet sind, dass die beiden Brennebenen in Dispersionsrichtung und Nicht-Dispersionsrichtung am selben Ort sind. Durch das erfindungsgemäße anamorphe, insbesondere doppelt anamorphe Spektrometer eröffnen sich durch die Wahl der vier Brennweiten neue Gestaltungsmöglichkeiten. Insbesondere können die Abbildungsverhältnisse in Dispersionsrichtung und in Nicht-Dispersionsrichtung unabhängig voneinander eingestellt werden. Hierdurch sind insbesondere Optimierungen in Bauform des Spektrometers oder optischem Durchsatz möglich, die selbst keinen negativen Einfluss auf den gewünschten Spektralbereich oder das gewünschte Auflösungsvermögen haben.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt eine mögliche Anordnung der Komponenten eines erfindungsgemäßen optischen Spektrometers sowie exemplarisch den Verlauf dreier Lichtstrahlen unterschiedlicher Wellenlänge durch das Spektrometer, welche senkrecht durch das Zentrum der Eingangsapertur in das Spektrometer eintreten, wobei das kollimierende optische System einen Zylinderspiegel und einen Freiformspiegel umfasst und das fokussierende optische System zwei Freiformspiegel umfasst.
- Fig. 1b: zeigt die Abstände der optischen Elemente zur Eingangsapertur bzw. zum Detektor in der in Fig. 1a gezeigten bevorzugten Ausführungsform.
- Fig. 2a-b: zeigen schematisch die Komponenten eines kollimierenden optischen Systems mit zwei optischen Elementen sowie eine Darstellung des Lichtstrahlverlaufs des durch das kollimierende optische System verlaufenden Lichts mit Blick a) in Nicht-Dispersionsrichtung y (Blick senkrecht zur x-z-Ebene) und b) in Dispersionsrichtung x (Blick senkrecht zur y-z-Ebene.
- Fig. 3a-c: zeigen schematisch die Komponenten eines erfindungsgemäßen Spektrometers sowie eine Darstellung des Lichtstrahlverlaufs des durch das Spektrometer verlaufenden Lichts mit Blick
a) in Nicht-Dispersionsrichtung y,
b) in Richtung der lokalen Dispersionsrichtung x des kollimierten Licht- strahls (senkrecht zur lokalen y-z-Ebene vor dem dispersiven Element),
c) in Richtung der lokalen Dispersionsrichtung x des fokussierten Lichtstrahls (senkrecht zur lokalen y-z-Ebene nach dem dispersiven Element).

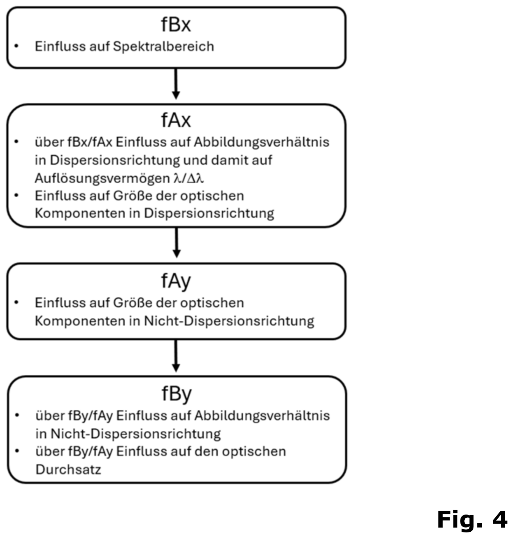

- Fig. 4: zeigt die wesentlichen Schritte des erfindungsgemäßen Verfahrens zur Bestimmung der Brennweiten im Rahmen der Herstellung eines erfindungsgemäßen Spektrometers.

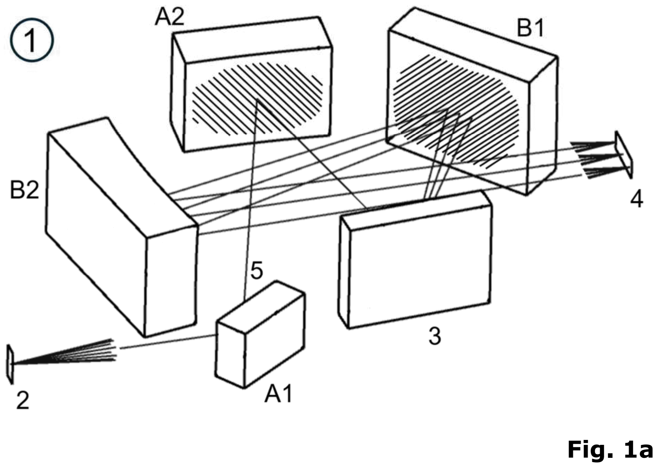

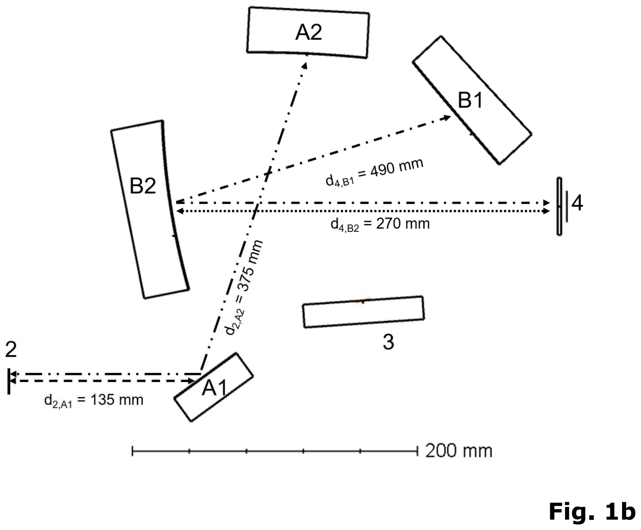

**Fig. 1a** und **Fig. 1b** zeigen exemplarisch eine besonders bevorzugte Ausführungsform des erfindungsgemäßen Spektrometers **1** mit einer Eingangsapertur **2**, einem kollimierenden optischen System **A** mit optischen Elemente **A1**, **A2**, einem dispersiven Element **3**, einem fokussierenden optischen System **B** mit optischen Elementen **B1, B2** und einem Detektor **4.**

Der Übersichtlichkeit halber wurde das in das Spektrometer als Strahlungskonus eintretende Licht zwischen den optischen Elementen A1, A2, B1, B2 lediglich durch drei Lichtstrahlen unterschiedlicher Wellenlänge repräsentiert, die senkrecht durch das Zentrum der Eingangsapertur 2 in das Spektrometer 1 eintreten (Zentralstrahlen) und nach dem dispersiven Element 3 unterschiedliche Wege zum Detektor nehmen. Auf den Oberflächen der Spiegel A2, B1 ist jeweils die Ausleuchtung des gesamten in das Spektrometer 1 eintretenden Strahlungskonus als schraffierter Bereich dargestellt.

Der Zentralstrahl mit der Wellenlänge λz, der das Zentrum des Detektors 4 erreicht, definiert die optische Achse 5 und die zwischen den optischen Elementen lokale Ausbreitungsrichtung z des Lichts.

Die Eingangsapertur 2 kann bspw. als Spalt ausgebildet sein. Um die Breite des Bildes der Eingangsapertur 2 klein zu halten, wird in der Regel ein Spalt als Eingangsapertur 2 benutzt, dessen Breite typischerweise in der Größenordnung von wenigen Mikrometern bis 1 Millimeter liegt. Die Höhe des Spaltes kann dagegen größer sein und ist in der Regel einige Millimeter groß. Alternativ dazu kann als Eingangsapertur 2 ein Faserende oder eine Anordnung mehrerer, beispielsweise übereinander angeordneter, Faserenden verwendet werden.

Fig.1a zeigt, wie drei Zentralstrahlen unterschiedlicher Wellenlänge zunächst von der Eingangsapertur 2 aus über das optische Element A1 und über das optische Element A2 zum dispersiven Element 3 gelenkt werden. Hinter dem dispersiven Element 3 setzen die drei Zentralstrahlen unterschiedlicher Wellenlänge ihren Pfad in unterschiedliche Richtungen weiter fort und werden über die Elemente B1 und anschließend B2 auf unterschiedliche Orte des Detektors 4 gelenkt.

Der gesamte in das Spektrometer eintretende Lichtkonus umschließt die Zentralstrahlen. Das eintretende Licht wird durch das kollimierende optische System A kollimiert und auf das dispersive Element 3 (bspw. ein Transmissionsgitter, Reflexionsgitter, Prisma) gelenkt. Vom dispersiven Element 3 aus werden die verschiedenen Wellenlängen λ des kollimierten Lichtstrahls unterschiedlich stark in Dispersionsrichtung x abgelenkt. Das fokussierende optische System **B** nimmt dieses Licht auf und fokussiert Licht unterschiedlicher Wellenlängen λ, auf unterschiedliche Stellen des Detektors **D.** Das dispersive Element 3 wirkt als Systemblende (aperture stop), welche die auf das fokussierende optische System B treffende Strahlung begrenzt. Insgesamt entsteht für jede Wellenlänge λ ein Bild der Eingangsapertur 2 auf dem Detektor 4.

Bei der konkreten in Fig. 1a und Fig. 1b gezeigten Ausführungsform des erfindungsgemäßen Spektrometers 1 umfasst das kollimierende optische System A einen zylindrischen Spiegel (optisches Element A1) und einen Freiformspiegel (optisches Element A2); das fokussierende optische System B umfasst zwei Freiformspiegel (optische Elemente B1, B2). Durch Verwendung des zylindrischen Spiegels A1 wird der durch die Eingangsapertur 2 tretende homogenen Strahlungskegel in die Nicht-Dispersionsrichtung y verengt, so dass die auf den zylindrischen Spiegel A1 folgenden Elemente (disperseres Element 3 und optische Elemente A1, B1, B2) in Nicht-Dispersionsrichtung y kompakter ausgeführt werden können.

**Fig. 1b** zeigt die bei dem in Fig. 1a gezeigten konkreten Beispiel verwendeten Abstände der optischen Elemente A1, A2 zur Eingangsapertur 2 und die Abstände der optischen Elemente B1, B1 zum Detektor 4. Die einzelnen optischen Elemente A1, A2, B1, B2 haben jeweils eine erste Element-Brennweite fA1x, fA2x und in einer dazu senkrechten Nicht-Dispersionsrichtung y eine zweite Element-Brennweite fA1y, fA2y. Die Element-Brennweiten fA1x, fA2x, fB1x, fB2x der optischen Elemente A1, A2, B1, B2 sowie die oben genannten Abstände sind in nachfolgender Tabelle zusammengefasst:

| **Spiegel des kollimierenden optischen Systems** | **Abstand zur Eingangsapertur** | **Element-Brennweite x** | **Element-Brennweite y** |
|---|---|---|---|
| A1 | 135 mm | fA1x = ∞ | fA1y = 315 mm |
| A2 | 375 mm | fA2x = 375 mm | fA2y = 740 mm |

| **Spiegel des fokussierenden optischen Systems** | **Abstand zum Detektor** | **Element-Brennweite x** | **Element-Brennweite y** |
|---|---|---|---|
| B1 | 490 mm | fB1x = - 2800 mm | fB1y = 670 mm |
| B2 | 270 mm | fB2x = 250 mm | fB2y = 390 mm |

Im vorliegenden Beispiel sind die zweiten Element-Brennweiten fA1y, fA2y sowohl des Spiegels A1 als auch des Spiegels A2 endlich, so dass die Brechkraft des kollimierenden optischen Systems A in der Nicht-Dispersionsrichtung y auf beide optischen Elemente A1, A2 aufgeteilt ist. Die erste Element-Brennweite fB1x des Spiegels B2 des fokussierenden optischen Systems B ist im vorliegenden Beispiel negativ. Dies wurde deshalb so gewählt, um die Ausleuchtung des Spiegels B2 in Dispersionsrichtung so zu gestalten, dass Spiegel B2 anschließend eine telezentrische Fokussierung für alle Wellenlängen λ auf den Detektor 4 ermöglicht, d.h. dass die Zentralstrahlen jeder Wellenlänge senkrecht auf den Detektor treffen.

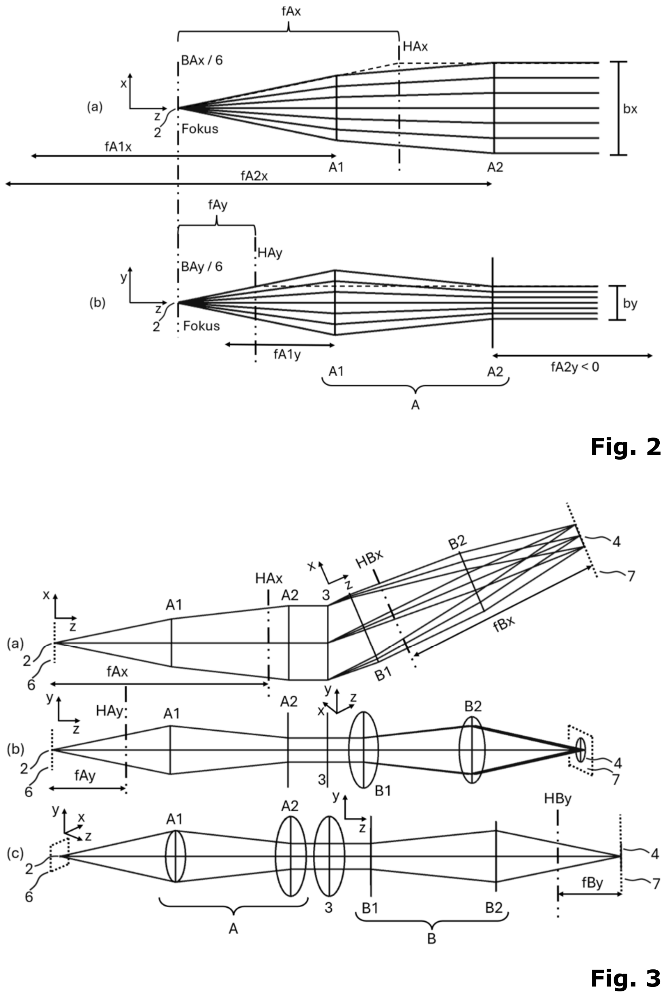

**Fig. 2a** und **Fig. 2b** zeigen den Verlauf des entlang der lokalen Ausbreitungsrichtung z verlaufenden Lichtstrahls von der in einer Aperturebene **6** angeordneten Eingangsapertur 2 bis zum Austritt aus dem kollimierenden optischen System A in Dispersionsrichtung x und in Nicht-Dispersionsrichtung y. Das Licht verlässt die Eingangsapertur 2 in einem homogenen Strahlungskegel, der durch eine gewisse F-Zahl (F/#) bzw. numerische Apertur bestimmt ist, trifft auf die optischen Elemente A1, A2 des kollimierenden optischen Systems A und wird von diesem kollimiert. Das kollimierende optische System A weist erfindungsgemäß in einer (lokalen) Dispersionsrichtung **x** eine erste Brennweite **fAx** und eine erste Brennebene **BAx** und in einer Nicht-Dispersionsrichtung **y** eine zweite Brennweite **fAy** und eine zweite Brennebene **BAy** auf, wobei sich die Brennweiten fAx, fAy voneinander unterscheiden. Bei dem kollimierenden optischen System A handelt sich also um ein anamorphes optisches System. Dementsprechend weist das kollimierende optische System A in Dispersionsrichtung x und in Nicht-Dispersions-richtung y auch zwei sich unterscheidende Hauptebenen **HAx, HAy** auf. Die Element-Brennweiten fA1x, fA1y, fA2x, fA2y der beiden optischen Elemente **A1, A2** des kollimierenden optischen Systems A sind so gewählt und aufeinander abgestimmt, dass sowohl die Brennebene BAx in Dispersionsrichtung als auch die Brennebene BAy in Nicht-Dispersionsrichtung y in der Aperturebene 6 liegen und die Brennpunkte in Dispersionsrichtung x und Nicht-Dispersionsrichtung y zusammenfallen, so dass der Lichtstrahl, der kegelförmig und homogen in Dispersionsrichtung x und Nicht-Dispersionsrichtung y aus einem Fokuspunkt (Brennpunkt des kollimierenden optischen Systems A) kommt, hinter dem kollimierenden optischen System A in Dispersionsrichtung x und Nicht-Dispersionsrichtung y kollimiert ist. Auf diese Weise wird ein kollimierter Lichtstrahl mit unterschiedlicher Breite **bx** in Dispersionsrichtung x (Fig. 2a) und Breite **by** in Nicht-Dispersionsrichtung y (Fig. 2b) erzeugt.

Im vorliegenden Fall ist die Breite **by** in Nicht-Dispersionsrichtung kleiner als Breite **bx** in Dispersionsrichtung x, da die erste Brennweite fx in Dispersionsrichtung x größer ist als die zweite Brennweite fy in Nicht-Dispersionsrichtung y. Der Einsatz eines solchen in **Fig. 2** dargestellten kollimierenden optischen Systems in einem Spektrometer 1 führt dazu, dass eine geringe Bauhöhe des dispersiven Elements 3 und der optischen Elemente A2, B1, B2 in Nicht-Dispersionsrichtung y und somit ein kompakteres Spektrometer 1 realisiert werden kann, ohne die Étendue (Lichtdurchsatz) des Spektrometers negativ zu beeinflussen.

Der gesamte Verlauf des Lichtstrahls durch das Spektrometer 1 ist in **Fig. 3a** **-** **Fig. 3c** gezeigt. In Fig. 3a - Fig. 3c ist der Lichtstrahl in verschiedenen Blickrichtungen gezeigt. Das kartesische Koordinatensystem xyz bezieht sich auf die optische Achse 5. Die lokale z-Achse weist also immer in die Strahlrichtung des Zentralstrahls (lokale Ausbreitungsrichtung) der auf das Zentrum des Detektors abgebildet wird (Zentralstrahl mit Zentralwellenlänge λz). Die lokale Dispersions-richtung x verläuft senkrecht zur lokalen Ausbreitungsrichtung z und zur Nicht-Dispersions-Richtung y. Bei Ablenkung des Lichtstrahls (bspw. durch optische Elemente A1, A2, B1, B2 oder durch das dispersive Element 3) und der damit verbundenen Richtungsänderung der lokalen Ausbreitungsrichtung z des Zentralstrahls mit der Zentralwellenlänge λz, ändert sich auch die lokale Dispersions-richtung x, wie in Fig. 3a - Fig. 3c gezeigt. D.h., das Koordinatensystem xyz ändert sich somit relativ zu den optischen Elementen A1, A2, B1, B2 und zum dispersiven Element 3.

Das Spektrometer 1 umfasst ein kollimierendes optisches System, wie es in Fig. 2 dargestellt ist, gefolgt von einem dispersiven optischen Element 3 und einem fokussierenden optischen System B.

Das fokussierende optische System B weist in der in Fig. 3a-Fig. 3c dargestellten Ausführungsform in der Dispersionsrichtung **x** eine erste Brennweite **fBx** und eine erste Brennebene **BBx** und in einer Nicht-Dispersionsrichtung **y** eine zweite Brennweite **fBy** und eine zweite Brennebene **BBy** auf, wobei sich die Brennweite fBx, fBy voneinander unterscheiden. Bei dem fokussierenden optischen System B handelt sich also auch um ein anamorphes optisches System. Dementsprechend weist das fokussierende optische System B in Dispersionsrichtung x und in Nicht-Dispersionsrichtung y auch zwei sich unterscheidende Hauptebenen **HBx, HBy** auf. Der Detektor 4 befindet sich in einer Detektor-Ebene **7.** Das fokussierende optische System B umfasst mindestens zwei optische Elemente **B1, B2,** deren Element-Brennweiten fB1x, fB1y, fB2x, fB2y so gewählt und aufeinander abgestimmt sind, dass sowohl die Brennebene BBx in Dispersionsrichtung als auch die Brennebene BBy in Nicht-Dispersionsrichtung in der Detektor-Ebene 7 liegen und die Brennpunkte in Dispersionsrichtung x und Nicht-Dispersionsrichtung y zusammenfallen, so dass der Lichtstrahl, der kollimiert in das fokussierende optische System B tritt, hinter dem fokussierenden optischen System B in der Detektorebene 7 fokussiert wird.

Durch die anamorphe / doppelt-anamorphe Auslegung der optischen Systeme A, B des Spektrometers 1 kann die Bauhöhe des Spektrometers 1 verringert werden. Durch die Reduzierung der Bauhöhe der optischen Elemente in Nicht-Dispersionsrichtung wird aber keinesfalls der durch die Eingangsapertur 2 eintretende Lichtkonus beschnitten. Er bleibt vollständig erhalten und das gesamte Licht findet seinen Weg zum Detektor. Der Eintrittskonus ist charakterisiert durch eine homogene numerische Apertur NA oder durch eine homogene F-Zahl (F/#). Auch das kollimierende optische System A ist auf diese homogene F-Zahl angepasst, denn es gilt: F/# = fAx/bx = FAy/by (vgl. Fig. 2).

Das erfindungsgemäße Spektrometer 1 ist charakterisiert durch vier Brennweiten fAx, fAy, fBx, fBy. Durch die besonders bevorzugte Verwendung zweier anamorpher Spiegel/Linsensysteme, nämlich einerseits für das kollimierende optische System A und andererseits für das fokussierende optische System B, erhält man bei der Herstellung des erfindungsgemäßen Spektrometers 1 zusätzliche Freiheitsgrade bezüglich der Wahl der vier Brennweiten fAx, fAy, fBx, fBy. Dabei ergibt sich durch die Wahl der ersten Brennweiten fBx und fAx (in Dispersions-richtung) die Vergrößerung des Bildes der Eingangsapertur 2 auf den Detektor 4 in Dispersionsrichtung x (spektrale Dimension) und durch die Wahl der zweiten Brennweiten fBy und fAy die Vergrößerung des Bildes der Eingangsapertur 2 auf den Detektor 4 in Nicht-Dispersionsrichtung y (örtliche Dimension). Die erste Brennweite fBx des fokussierenden optischen Systems bestimmt zudem, bei der Verwendung eines dispersiven Elements 3 mit gegebener Dispersionsstärke (Furchendichte beim Gitter, Dispersion beim Prisma) und eines Detektors 4 mit gegebener Größe in Dispersionsrichtung, welcher Spektralbereich von λmin bis λmax in einer Messung zugänglich ist. Die erste Brennweite fAx des kollimierenden optischen Systems bestimmt maßgeblich die Größe der folgenden optischen Elemente B1, B2 und des dispersiven Elements 3 in Dispersionsrichtung und die zweite Brennweite fAy des kollimierenden optischen Systems bestimmt maßgeblich die Größe der folgenden optischen Elemente B1, B2 und des dispersiven Elements 3 in Nicht-Dispersionsrichtung.

In **Fig. 4** ist gezeigt, wie die Brennweiten des kollimierenden optischen Systems A und des fokussierenden optischen System B im Rahmen der Herstellung des erfindungsgemäßen Spektrometers 1 bestimmt werden. Zunächst wird die erste Brennweite fBx des fokussierenden optischen Systems B in Abhängigkeit der auf dem Detektor 4 zu detektierenden minimalen Wellenlänge λmin und maximalen Wellenlänge λmax gewählt. Dabei wird die erste Brennweite fBx des fokussierenden optischen Systems B vorzugsweise so gewählt, dass bei einem vorgegebenen Detektor 4 mit einer vorgegebenen Breite sowie einem gewählten dispersiven Element 3 mit gegebener Dispersionsstärke ein gewünschter Spektralbereich von λmin bis λmax vollständig auf dem Detektor 4 abgebildet wird und ein vollständiges Spektrum (also in einer Messung ohne Verdrehung des dispersiven Elements 3) aufgenommen werden kann.

Bei festgelegter erster Brennweite fBx des fokussierenden optischen Systems B wird dann die erste Brennweite fAx des kollimierenden optischen Systems A bestimmt. Das Verhältnis fBx/fAx bestimmt die Breite des Bildes der Eingangsapertur 2 auf dem Detektor 4 in Dispersionsrichtung und hat damit direkten Einfluss auf das spektrale Auflösungsvermögen λ/Δλ. Typischerweise wird eine 1:1 Abbildung gewählt mit fAx=fBx. Für eine Verkleinerung der Abbildung der Eingangsapertur 2 auf den Detektor 4 (und damit einem verbesserten Auflösungsvermögen) wäre eine Brennweite fAx des kollimierenden optischen Systems A notwendig, die größer ist als die Brennweite fBx des fokussierenden optischen Systems B (fAx>fBx). Dies ist für das spektrale Auflösungsvermögen von Vorteil (solange eine hinreichend gute Abbildungsqualität der verkleinerten Abbildung realisiert werden kann), vergrößert aber auch die optischen Komponenten in Dispersionsrichtung x.

Die zweiten Brennweiten fAy, fBy des kollimierenden optischen Systems A und des fokussierenden optischen Systems B werden unabhängig von der ersten Brennweite fAx des kollimierenden optischen Systems A und unabhängig von der ersten Brennweite fBx des fokussierenden optischen Systems B gewählt.

Zunächst wählt man die Brennweite fAy, die direkten Einfluss auf die Größe der optischen Elemente A2, B1, B2 und des dispersiven Elements 3 in Nicht-Dispersionsrichtung y hat. Eine kleine zweite Brennweite fAy des kollimierenden optischen Systems A ist hier also von Vorteil. Nach der Wahl der zweiten Brennweite fAy des kollimierenden optischen Systems A wählt man die zweite Brennweite fBy des fokussierenden optischen Systems B. Das Verhältnis fBy/fAy bestimmt dann das Abbildungsverhältnis der Eingangsapertur 2 auf den Detektor 4 in Nicht-Dispersionsrichtung y. Das optimale Abbildungsverhältnis hängt hier ganz von der jeweiligen Applikation ab, für die das Spektrometer 1 eingesetzt werden soll. Soll beispielsweise das Licht einer vorgeschalteten Optik wie eines Mikroskops spektral analysiert werden und soll dabei die Vergrößerung des Mikroskops nicht durch das Spektrometer verändert werden, wählt man hier in Nicht-Dispersionsrichtung eine 1:1 Abbildung. Soll hingegen der optische Durchsatz möglichst groß sein und demnach eine möglichst große Eingangsapertur auf den Detektor abgebildet werden, so ist eine Verkleinerung mit fBy<fAy von Vorteil. Eine Vergrößerung kann von Vorteil sein, wenn feine Strukturen innerhalb der Eingangsapertur 2 örtlich aufgelöst werden sollen.

Das erfindungsgemäße Spektrometer 1 umfasst vorzugsweise ein anamorphes kollimierendes optisches System A und ein anamorphes fokussierendes optisches System B, was das Gesamtsystem im allgemeinen Fall zu einem anamorphen System macht (doppelt-anamorph), bei dem die Abbildung der Eingangsapertur 2 auf den Detektor 4 unterschiedliche Vergrößerungen in Dispersionsrichtung x und Nicht-Dispersionsrichtung y hat. Bei einer speziellen erfindungsgemäßen Ausführungsform kann eine anamorphe Abbildung auch realisiert werden, wenn ausschließlich das kollimierende optische System A anamorph ist. Hinzu kommt der von der vorliegenden Erfindung umfasste Spezialfall, dass sowohl das kollimierende optische System A als auch das fokussierende optische System B anamorph sind, sich insgesamt aber in Dispersionsrichtung x und in Nicht-Dispersionsrichtung y gleiche Vergrößerungen für das Spektrometer 1 ergeben. Das Gesamtsystem ist dann nicht mehr anamorph, weist aber trotzdem Vorteile gegenüber Systemen nach dem Stand der Technik auf. Dies geschieht z.B. wenn fBx=c*FBy und FAx=c*FAy ist. Ist die Konstante c>1, dann ist fAx>FAy und die Bauhöhe des Spektrometers ist in Nicht-Dispersionsrichtung reduziert. Gleichzeitig ergibt sich für die Abbildungsverhältnisse in Dispersions- und Nicht-Dispersionsrichtung fBx/fAx = (c*fBy)/(c*fAy) = FBy/FAy. Die Abbildungsverhältnisse sind also in Dispersions- und Nicht-Dispersionsrichtung gleich, trotzdem kann die Bauhöhe des Spektrometers reduziert werden.

Im Folgenden soll anhand einer beispielhaften Ausführungsform des erfindungsgemäßen Spektrometers 1, wie es in Fig. 1a und Fig. 1b gezeigt ist, aufgezeigt werden, wie sich unterschiedliche Brennweiten innerhalb des kollimierenden optischen Systems A quantitativ auf die Bauhöhe des Spektrometers auswirken. Die beispielhafte Ausführungsform zeigt ein Spektrometer 1 mit gutem Auflösungsvermögen und kompakter Bauweise, bei dem die Abbildung aufgrund der späteren Verwendung des Spektrometers 1 in Nicht-Dispersionsrichtung y eine 1:1 Abbildung sein soll. Bei der beispielhaften Ausführungsform weist das kollimierende optische System A mit dem Zylinderspiegel A1 und dem Freiformspiegel A2 eine erste Brennweite fAx = 375 mm und eine zweite Brennweite fAy = 264 mm auf. Das fokussierende optische System mit den beiden Freiformspiegeln B1, B2 weist eine erste Brennweiten fBx = 264 mm und eine zweite Brennweite fBy = 264 mm auf. Dabei wurden die Parameter der Freiformspiegel A2, B1, B2 so angepasst, dass eine scharfe Abbildung über die gesamte Detektorfläche erzeugt werden kann. Das Spektrometer 1 bildet die Eingangsapertur 2 in der Nicht-Dispersionsrichtung y 1:1 ab. In der Dispersionsrichtung x wird eine Verkleinerung von mx = 264/375 ≈ 0,7 erzeugt, was das spektrale Auflösungsvermögen gegenüber einer 1:1-Abbildung verbessert. Die erste Brennweite fBx = 264 mm des fokussierenden optischen Systems B wurde so gewählt, dass mit einem als dispersives Element 3 dienenden Gitter mit einer Furchendichte von 600 Linien/mm und einer bestimmten Gitterstellung (Einfallswinkel der Strahlung auf das Gitter) ein Spektralbereich von λ = 533 nm bis λ = 680 nm auf einem Detektor mit Detektorbreite von 26,4 mm abgebildet wird. Durch Drehen des Gitters können andere Spektralbereiche zugänglich gemacht werden. Bei der hier beschriebenen Ausführungsform des erfindungsgemäßen Spektrometers 1 sind die gemessenen Spektrallinien um den Faktor 0,7 schmaler als bei einem Spektrometer, das eine reine 1:1 Abbildung erzeugt. Die Höhe der Eingangsapertur 2 wird durch die Wahl von fAy = fBy = 264 mm im Verhältnis 1:1 auf den Detektor 4 abgebildet. Gleichzeitig sorgt die Wahl der zweiten Brennweiten fAy = 264mm < 375mm des kollimierenden optischen Systems A in Nicht-Dispersionsrichtung y, die kleiner ist als die erste Brennweite fAx des kollimierenden optischen Systems A in Dispersionsrichtung x, dafür, dass die optischen Elemente A2, B1, B2 und das dispersive Element 3 in Nicht-Dispersionsrichtung y sehr viel kleiner ausfallen können als beispielsweise bei einem bekannten Spektrometer, welches eingangsseitig eine einheitliche Brennweite von fA = 375 mm hätte und ausgangseitig eine Brennweite von fB = 264 mm. Bei letzterem ergäbe sich über die Brennweite von fA = 375 mm und die numerische Apertur von NA = 0.1 beispielsweise eine Höhe des Gitters von mindestens 2*375 mm*tan(arcsin(0.1)) = 75 mm. Beim der hier beschriebenen Ausführungsform des erfindungsgemäßen Spektrometers hingegen ergibt sich eine erforderliche Gitterhöhe von 2*264 mm*tan(arcsin(0.1)) = 53 mm. Die Gitterhöhe kann also um ca. 30% reduziert werden. Auch die Höhe der Freiformspiegel A2, B1 und B2 können entsprechend kleiner als bei konventionellen Spektrometern gewählt werden. Das beschriebene Beispiel macht deutlich, dass mit dem erfindungsgemäßen Spektrometer eine erhebliche Einsparung von Bauraum und damit auch eine erhebliche Kostenersparnis erreicht werden kann. Ein konventionelles Spektrometer mit einer eingangsseitigen einheitlichen Brennweite von fA = 375 mm und einer ausgangsseitigen einheitlichen Brennweite von fB = 264 mm hätte im Vergleich zur beispielhaften Ausführungsform des erfindungsgemäßen Spektrometers zwar gleiche spektrale Eigenschaften, würde aber neben der größeren Bauform auch eine Verkleinerung der Eingangsapertur 2 in Nichtdispersionsrichtung auf den Detektor 4 aufweisen.

### Bezugszeichenliste

- 1: Spektrometer
- 2: Eingangsapertur
- 3: dispersives Element
- 4: Detektor
- 5: optische Achse
- 6: Aperturebene
- 7: Detektorebene
- A: kollimierendes optisches System
- A1, A2: optische Elemente des kollimierenden optischen Systems
- BAx: erste Brennebene des kollimierenden optischen Systems (in Dispersionsrichtung x)
- BAy: zweite Brennebene des kollimierenden optischen Systems (in Nicht-Dispersionsrichtung y)
- fAx: erste Brennweite des kollimierenden optischen Systems (in Dispersionsrichtung x)
- fAy: zweite Brennweite des kollimierenden optischen Systems (in Nicht-Dispersionsrichtung y)
- fA1x: erste Element-Brennweite des optischen Elements A1 (Brennweite des optischen Elements A1 in Dispersionsrichtung x)
- fA1y: zweite Element-Brennweite des optischen Elements A1 (Brennweite des optischen Elements A1 in Nicht-Dispersionsrichtung y)
- fA1x: erste Element-Brennweite des optischen Elements A2 (Brennweite des optischen Elements A2 in Dispersionsrichtung x)
- fA1y: zweite Element-Brennweite des optischen Elements A2 (Brennweite des optischen Elements A2 in Nicht-Dispersionsrichtung y)
- HAx: erste Hauptebene des kollimierenden optischen Systems
- HAy: zweite Hauptebene des kollimierenden optischen Systems
- B: fokussierendes optisches System
- B1, B2: optische Elemente des fokussierenden optischen Systems
- BBx: erste Brennebene des fokussierenden optischen Systems
- BBy: zweite Brennebene des fokussierenden optischen Systems
- fBx: erste Brennweite des fokussierenden optischen Systems (in Dispersionsrichtung x)
- fBy: zweite Brennweite des fokussierenden optischen Systems (in Nicht-Dispersionsrichtung y)
- fB1x: erste Element-Brennweite des optischen Elements B1 (Brennweite des optischen Elements B1 in Dispersionsrichtung x)
- fB1y: zweite Element-Brennweite des optischen Elements B1 (Brennweite des optischen Elements B1 in Nicht-Dispersionsrichtung y)
- fB1x: erste Element-Brennweite des optischen Elements B2 (Brennweite des optischen Elements B2 in Dispersionsrichtung x)
- fB1y: zweite Element-Brennweite des optischen Elements B2 (Brennweite des optischen Elements B2 in Nicht-Dispersionsrichtung y)
- HBx: erste Hauptebene des fokussierenden optischen Systems
- HBy: zweite Hauptebene des fokussierenden optischen Systems
- x: lokale Dispersions-Richtung (Richtung in der eine Aufspaltung des durch das dispersive Element erfolgt/vorliegt);
- y: Nicht-Dispersions-Richtung ist senkrecht zur Dispersion-Richtung
- z: Ausbreitungsrichtung des Zentralstrahls mit der Wellenlänge, der nach Durchlaufen des Spektrometers die Mitte des Detektors erreicht.

### Literaturliste

[US659] US8773659B2
[US807] US2005264807A1
[US088] US2009103088A1
[US772] US2006082772A1
[US140] US6266140B1
[US413] US10962413B2
[WO584] WO 2021/255584 A1

## Patentansprüche

1. Optisches Spektrometer (1) mit einer optischen Achse, umfassend:
eine Eingangsapertur (2) zur Beschränkung von entlang der optischen Achse (5) in das Spektrometer (1) eintretenden Lichts, wobei die Eingangsapertur (2) in einer Aperturebene (6) angeordnet ist, die senkrecht zur optischen Achse (5) ist,
ein kollimierendes optisches System (A) mit mindestens zwei optischen Elementen (A1, A2) zur Kollimation des durch die Eingangsapertur (2) hindurchtretenden Lichts, wobei das kollimierende optische System (A) senkrecht zur optischen Achse (5) in einer Dispersionsrichtung x eine erste Brennweite fAx und eine erste Brennebene (BAx) und in einer dazu senkrechten Nicht-Dispersionsrichtung y eine zweite Brennweite fAy und eine zweite Brennebene (BAy) aufweist,
ein dispersives Element (3) zur spektralen Aufspaltung in der Dispersions-richtung x von auf das dispersive Element (3) auftreffenden Lichts,
ein fokussierendes optisches System (B) zur Fokussierung des von dem dispersiven Element (3) spektral aufgespaltenen Lichts, wobei das fokussierende optische System (B) senkrecht zur optischen Achse (5) in der Dispersionsrichtung x eine erste Brennweite fBx und eine erste Brennebene (BBx) und in der Nicht-Dispersionsrichtung y eine zweite Brennweite fBy und eine zweite Brennebene (BBy) aufweist,
einen Detektor (4) zur Detektion des fokussierten Lichts in einer Detektor-ebene (7),
wobei sich die erste Brennweite fAx des kollimierenden optischen Systems (A) und die zweite Brennweite fAy des kollimierenden optischen Systems (A) voneinander unterscheiden, und
wobei die erste Brennebene (BAx) des kollimierenden optischen Systems (A) und die zweite Brennebene (BAy) des kollimierenden optischen Systems (A) mit der Aperturebene 6 zusammenfallen,
wobei die optischen Elemente (A1, A2) senkrecht zur optischen Achse (5) in einer Dispersionsrichtung x jeweils eine **erste Element-Brennweite** fA1x, fA2x und in einer dazu senkrechten Nicht-Dispersionsrichtung y eine **zweite Element-Brennweite** fA1y, fA2y aufweisen,
**dadurch gekennzeichnet,**
**dass** sowohl die **erste Element-Brennweite** als auch die **zweite Element-Brennweite** zumindest eines der optischen Elemente (A1, A2) des kollimierenden optisches Systems (A) endlich ist und sich voneinander unterscheiden.

2. Spektrometer (1) nach Anspruch 1, **dadurch gekennzeichnet, dass** die erste Brennweite fAx des kollimierenden optischen Systems (A) größer ist als die zweite Brennweite fAy des kollimierenden optischen Systems (A): fAx > fAy, vorzugsweise dass fAx > 1,1 fAy.

3. Spektrometer (1) nach einem der vorhergehenden Ansprüche, **dadurch gekennzeichnet,**
**dass** das fokussierende optische System (B) mindestens zwei optische Elemente (B1, B2) umfasst,
**dass** sich die erste Brennweite fBx des fokussierenden optischen Systems (B) und die zweite Brennweite fBy des fokussierenden optischen Systems (B) voneinander unterscheiden, und
**dass** die erste Brennebene (BBx) und die zweite Brennebene (BBy) des fokussierenden optischen Systems (B) mit der Detektor-Ebene (7) zusammenfallen.

4. Spektrometer (1) nach einem der vorhergehenden Ansprüche **dadurch gekennzeichnet, dass** die erste Brennweite fAx des kollimierenden optischen Systems (A) größer oder gleich der ersten Brennweite fBx des fokussierenden optischen Systems (B) ist: fAx ≥ fBx.

5. Spektrometer (1) nach einem der Ansprüche 1 bis 4, **dadurch gekennzeichnet, dass** die zweite Brennweite fAy des kollimierenden optischen Systems (A) gleich der zweiten Brennweite fBy des fokussierenden optischen Systems (B) ist: fAy = fBy.

6. Spektrometer (1) nach einem der Ansprüche 1 bis 4, **dadurch gekennzeichnet, dass** die zweite Brennweite fAy des kollimierenden optischen Systems (A) größer als die zweiten Brennweite fBy des fokussierenden optischen Systems (B) ist: fAy > fBy

7. Spektrometer (1) nach einem der Ansprüche 1 bis 5, **dadurch gekennzeichnet,**
**dass** die erste Brennweite fAx des kollimierenden optischen Systems (A) gleich der ersten Brennweite fBx des fokussierenden optischen Systems(B) ist,
**dass** die zweite Brennweite fAy des kollimierenden optischen Systems (A) gleich der zweiten Brennweite fBy des fokussierenden optischen Systems (B) ist, und
**dass** die erste Brennweite fAx des kollimierenden optischen Systems (A) größer als die zweite Brennweite fAy des kollimierenden optischen Systems (A) ist: $fAx = fBx > fAy = fBy .$

8. Spektrometer (1) nach einem der Ansprüche 1 bis 5, **dadurch gekennzeichnet,**
**dass** die erste Brennweite fAx des kollimierenden optischen Systems (A) größer als die erste Brennweite fBx des fokussierenden optischen Systems (B) ist und
**dass** die zweite Brennweite fAy des kollimierenden optischen Systems (A) gleich der zweiten Brennweite fBy des fokussierenden optischen Systems (B) ist: $fAx > fBx und fAy = fBy .$

9. Spektrometer (1) nach einem der vorhergehenden Ansprüche, **dadurch gekennzeichnet, dass** das kollimierende optische System (A) und/oder das fokussierende optische System (B) aus Linsen, aus Spiegeln oder aus einer Kombination daraus (katadioptrisch) besteht.

10. Spektrometer (1) nach Anspruch 9, **dadurch gekennzeichnet, dass** mindestens einer der Spiegel ein Freiformspiegel ist.

11. Spektrometer (1) nach Anspruch 10, **dadurch gekennzeichnet,**
**dass** das kollimierende optische System (A) einen Zylinderspiegel und einen Freiformspiegel umfasst, vorzugsweise aus einem Zylinderspiegel und einem Freiformspiegel besteht, und
**dass** das fokussierende optische System (B) zwei Freiformspiegeln umfasst, vorzugsweise aus zwei Freiformspiegeln besteht.

12. Verfahren zur Herstellung eines Spektrometers (1) gemäß einem der vorhergehenden Ansprüche, **dadurch gekennzeichnet, dass** zur Ausbildung des kollimierenden optischen Systems (A) und des fokussierenden optischen Systems (B):
zunächst die erste Brennweite fBx des fokussierenden optischen Systems (B) so gewählt wird, dass mit dem dispersiven Element (3) ein gewünschter Spektralbereich von λmin bis λmax auf dem Detektor (4) einer vorgegebenen Breite abgebildet wird, und
danach das Verhältnis von erster Brennweite fAx des kollimierenden optischen Systems (A) und erster Brennweite fBx des fokussierenden optischen Systems (B) in Abhängigkeit von einem gewünschten spektralen Auflösungsvermögen gewählt wird.

13. Verfahren nach Anspruch 12, **dadurch gekennzeichnet, dass** die zweite Brennweite fAy des kollimierenden optischen Systems (A) kleiner als die erste Brennweite fAx des kollimierenden optischen Systems (A) gewählt wird.
